# EUROPEAN PATENT APPLICATION

(11) **EP 2 362 480 A2**
(43) Date of publication of application: **31.08.2011**
(21) Application number: 11000752.3
(22) Date of filing: 31.01.2011
(51) Int. Cl.: H01M 10/44, H01M 10/48, H02J 7/00, H02J 7/02

(54) **Battery system**

(30) Priority: 26.02.2010 JP 2010041981; 22.06.2010 JP 2010141463
(71) Applicant: Sanyo Electric Co., Ltd., Moriguchi-shi Osaka, 570-8677 (JP)
(72) Inventor: Nakamura, Yoshihiro, Osaka 570-8677 (JP)
(74) Representative: Glawe, Delfs, Moll

(57) **Abstract**

A battery system(1), which allows adjustment of balance of the voltages among the chargeable batteries while preventing electric loss, includes a plurality of battery modules(21)(22)(23)(24)(25) connected in series, each battery module including a plurality of battery cells(31) in a manner chargeable and dischargeable through positive and negative electrode terminals(32)(33). The battery system includes a charging/discharging control unit(14) connected between both electrodes of the plurality of battery modules connected in series to simultaneously charge the plurality of battery modules. The battery system also includes a voltage detector(15) for detecting a voltage of each of the battery modules. Charge discharged from the battery module whose voltage is higher than the voltages of the other battery modules is boosted to a predetermined voltage to be simultaneously supplied to the plurality of battery modules.

## Description

### TECHNICAL FIELD

The present invention relates to a battery system including a plurality of chargeable and dischargeable battery modules having a plurality of battery cells.

### BACKGROUND ART

When a battery pack having a plurality of chargeable batteries connected in series is charged until the voltage between both ends thereof (both-end voltage) reaches a target voltage, the both-end voltages are not equal due to differences in charging speeds among those chargeable batteries, where both-end voltages of some batteries are low while those of the others are high. Charging of the series battery pack is finished when the both-end voltage of one of the chargeable batteries reaches a target voltage. Accordingly, the amount of electric energy charged in the chargeable battery whose both-end voltage is low is smaller than that of the chargeable battery whose both-end voltage is high, and the full capacity of the series battery pack is not reached as compared with when all the chargeable batteries are charged equally. In other words, the series battery pack is not fully charged.
In order to solve this problem, for example, an improvement is proposed in a battery pack including a plurality of chargeable battery cells (battery cells) connected in series in which each battery cell has a resistor in parallel. A battery cell whose both-end voltage is high is discharged through the resistor for decreasing the both-end voltage, so that the terminal voltages of the chargeable battery cells in the battery pack will be equal (see, for example, JP-A-11-234916).

In this conventional technique, however, the terminal voltages of the chargeable batteries in the battery pack will be equal by decreasing the terminal voltage of a chargeable battery having a high terminal voltage by discharging the electric energy charged in the chargeable battery through a resistor and consuming the energy as heat. Therefore, electric energy is lost as heat. In addition, since the amount of heat generated by the resistor is larger with a larger terminal voltage, a heat-dissipation structure is required to cope with such amount of heat. Moreover, the high temperature may degrade the performance of chargeable battery cells. The amount of heat generation per unit time can be reduced by increasing resistance. However, this poses a new problem that a longer time is required to fully charge the battery pack.

### SUMMARY

An advantage of some aspects of the present invention is to provide a configuration including a plurality of chargeable batteries connected that allows for balancing the terminal voltage among the chargeable batteries while preventing electric energy loss and heat generation.

According to an aspect of the invention, a battery system includes a plurality of battery modules electrically connected in series through two electrodes, each battery module being configured to include a plurality of battery cells in a manner chargeable and dischargeable through positive electrode and negative electrode terminals. The battery system includes a charging control unit (or a charging/discharging control unit) connected between both two electrodes of the plurality of battery modules connected in series to simultaneously charge the plurality of battery modules. The battery system also includes a voltage detector for detecting a voltage between the positive electrode terminal and the negative electrode terminal of each of the battery modules. Electrical energy discharged from the battery module whose voltage between terminals detected by the voltage detector is higher than the voltages between terminals of the other battery modules is boosted to a predetermined voltage to be simultaneously supplied to the plurality of battery modules.

In the battery system, it is preferable that a DC-DC converters having an input side connected to the positive electrode terminal and the negative electrode terminal of each of the battery modules are provided, and output from the battery module boosted by the DC-DC converters is simultaneously supplied to the plurality of battery modules.

According to another aspect of the invention, a battery system includes a plurality of battery modules electrically connected in series though two electrodes, each battery module being configured to include a plurality of battery cells in a manner chargeable and dischargeable through positive electrode and negative electrode terminals. The battery system includes a charging control unit (or a charging/discharging control unit) connected between both two electrodes of the plurality of battery modules connected in series to simultaneously charge the plurality of battery modules. A DC-DC converter is connected to each of the battery modules, with a primary side between the positive electrode and the negative electrode. Electrical energy discharged from the battery module whose voltage between terminals is higher than the voltages between terminals of the other battery modules is boosted to a predetermined voltage through the DC-DC converter corresponding to that battery module, and thereafter the boosted voltage is applied to the battery module whose voltage is lower than the voltage between terminals of that battery module.

In the battery system, it is preferable that charge is discharged from the battery module whose voltage between terminals is higher than a mean value of the voltages between terminals detected by the voltage detector or a value obtained based on the mean value, or a predetermined value.

In the battery system, it is preferable that the DC-DC converter corresponding to the battery module with a lower voltage between terminals is operated to receive on a primary side DC power output from the DC-DC converter corresponding to the battery module with a higher voltage between terminals.

In the battery system, it is preferable that a mean voltage is obtained from voltages between the positive electrode terminals and the negative electrode terminals of the battery modules, and the DC-DC converter is operated until the voltage between the positive electrode terminal and the negative electrode terminal of the battery module supplying power through the DC-DC converter approaches a target value.

In the battery system, it is preferable that the DC-DC converter has a primary side and a secondary side isolated from each other by a transformer at least including a primary-side coil and a secondary-side coil.

According to yet another aspect of the invention, a battery system includes a plurality of battery modules connected in series through two electrodes, each battery module including a combination of a plurality of battery cells in a manner chargeable and dischargeable through positive electrode and negative electrode terminals of the battery module. The battery system also includes a charging circuit connected to the positive electrode terminal and the negative electrode terminal of each of the battery modules. The battery module with a low voltage between the positive electrode terminal and the negative electrode terminal is charged with electrical energy from the charging circuit corresponding thereto so that voltages between the positive electrode terminals and the negative electrode terminals of the battery modules become equal.

In accordance with some aspects of the invention, balance of the voltages between terminals can be adjusted among a plurality of battery modules connected in series while power loss and heat generation can be prevented.

### BRIEF DESCRIPTION OF THE DRAWINGS

The invention will be described with reference to the accompanying drawings.
Fig. 1 shows a configuration of a power storage system according to a first embodiment of the invention.
Fig. 2 is a graph showing the correlation between both-end voltage and capacity of a battery module.
Fig. 3 is a flowchart showing an operation concerning charging of a battery system.
Fig. 4 shows a configuration of a DC-DC converter according to a second embodiment of the invention.
Fig. 5 is a flowchart showing an operation according to the second embodiment.
Fig. 6 shows a main configuration of a DC-DC converter according to a third embodiment of the invention.
Fig. 7 shows a configuration of a charging circuit unit according to a fourth embodiment of the invention.
Fig. 8 shows a configuration of a battery system according to a fifth embodiment of the invention.

### DESCRIPTION OF EXEMPLARY EMBODIMENTS

### First Embodiment

In the following, embodiments of the invention will be described with reference to the figures.

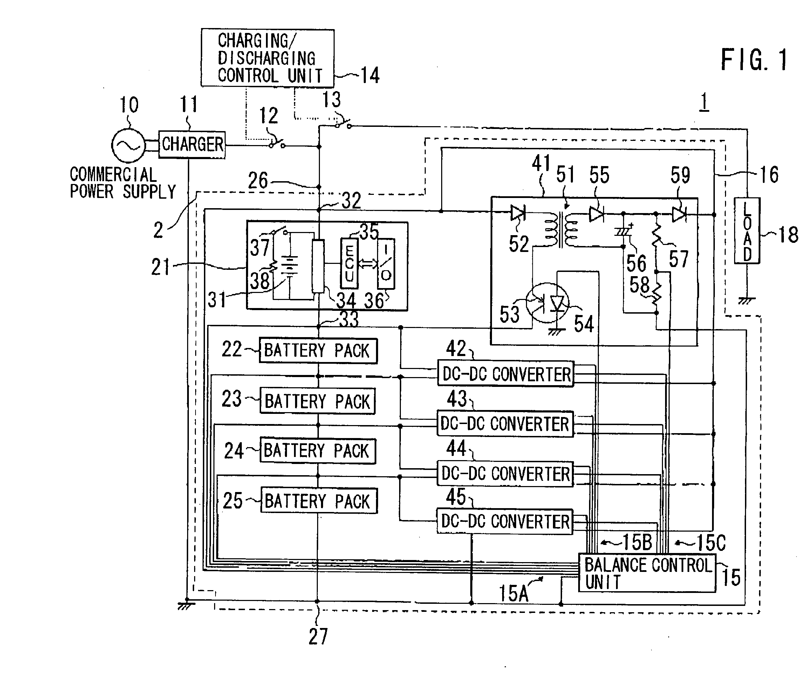

Fig. 1 shows a configuration of a power storage system 1 according to a first embodiment of the invention.

The power storage system 1 shown in Fig. 1 stores electric energy in a chargeable and dischargeable battery system 2 and supplies electric power to a load 18 as necessary. The load 18 may be a direct-current (DC) load, or a converter circuit for converting DC power to alternating-current (AC) power and an AC load connected with the converter circuit, or may be a converter circuit, if AC power output from the converter circuit is supplied to a system. The power storage system 1 includes, for example, a charger 11 containing an AC-DC converter for converting AC current from a commercial AC power supply system 10 into DC current, a charging control unit (constant current charge - constant voltage charge) for the battery, and the like. The battery system 2 is charged with DC current output by the charger 11. The battery system 2 may be charged using or partially using electric energy from a solar battery, a wind power generator, a private electric generator, or the like, in place of the commercial AC power supply system 10.

The battery system 2 is configured to include five battery modules 21 to 25 connected in series. The battery modules 21 to 25 each contain a plurality of battery cells 31 formed of lithium-ion battery, nickel metal hydride battery, etc. and store electric energy in the plurality of battery cells 31. Although the number of battery modules included in the battery system 2 is not limited, five battery modules 21 to 25 are provided in the present embodiment, by way of example. The battery modules 21 to 25 have common internal configurations, and therefore only the internal configuration of the battery module 21 is schematically shown and described here.

The battery module 21 includes a plurality of battery cells 31 connected in series and/or in parallel. The battery cell 31 is charged/discharged through a positive electrode terminal 32 and a negative electrode terminal 33 of the battery module 21.

For example, the battery module 21 is configured such that thirteen blocks having twenty-four battery cells 31 connected in parallel are connected in series. If the voltage of the battery cell 31 is 4 V, the voltage between the positive electrode terminal and the negative electrode terminal of the battery module is 52 V. Accordingly, the output voltage of the battery system 1 including the battery modules 21 to 25 connected in series is 260 V. It is noted that the voltage is set as appropriate in accordance with the specifications required for the battery system.

The battery module 21 further includes a controller 34 for detecting the temperature in this module (the battery cells 31 as a whole) to stop charging/discharging if the detected temperature exceeds a predetermined value and for detecting the both-end voltages of the plurality of battery cells 31, and an ECU 35 for calculating Relative State of Charge (RSOC) based on the voltage value and the current value detected by the controller 34 to output the RSOC data and a variety of other detected data through an input/output interface 36.

A resistor 38 is connected between both ends, that is, between the positive electrode terminal 32 and the negative electrode terminal 33 of a plurality of battery cells 31 of the battery module 21, through a switch 37. When the voltage between the positive electrode terminal 32 and the negative electrode terminal 33 is higher than the voltage between the terminals of the other modules 22-25, for example, the switch 37 is closed in response to a control signal input to ECU 35 from an external control unit to supply power to the resistor 38 in order to match the voltage to that of the other battery modules 22-25. Electric energy charged in a plurality of battery cells 31, namely, the battery module 21, flows through the resistor 38 to be charged into heat, which is in turn dissipated and consumed. The decrease of electric energy in the battery module 21 reduces the both-end voltage.
In embodiments of the invention, an external circuit as described later allows the electric energy accumulated in the battery module to move across the battery modules thereby performing balance adjustment among the battery modules. An adjustment signal is input as necessary, for example, when balance adjustment is delayed or when an adjustment range is exceeded.

The positive electrode terminal 26 of the battery system 2 is connected to a common line 16, and is also connected to the positive electrode side of the charger 11 so as to be connectable thereto and disconnectable therefrom through a charging switch 12 and connected to the load 18 so as to be connectable thereto and disconnectable therefrom through a discharging switch 13. The charging switch 12 and the discharging switch- 13 are opened/closed in accordance with control of a charging/discharging control unit 14. It is noted that DC power may be directly supplied to the load 18 from the battery system 2 or may be boosted or converted into AC as necessary.

When the battery system 2 is to be charged, the charging/discharging control unit 14 closes the charging switch 12 to connect the charger 11 to the positive electrode terminal 26 and opens the discharging switch 13. On the other hand, when the load 18 is to be fed by the battery system 2 (discharge), the charging/discharging control unit 14 opens the charging switch 12 and closes the discharging switch 13 to connect the positive electrode terminal to the load 18.

The power storage system 1 includes a balance control unit 15 (voltage detector) for detecting the voltage between the positive electrode terminal 32 and the negative electrode terminal 33 of each of the battery modules 21 to 25. The balance control unit 15 is provided with both-end voltage detection lines 15A connected to the positive electrode terminal 32 of the battery module 21, a connection terminal between the battery module 21 and the battery module 22 (corresponding to the negative electrode terminal of the battery module 21 and the positive electrode terminal of the battery module 22), a connection terminal between the battery module 22 and the battery module 23, a connection terminal between the battery module 23 and the battery module 24, a connection terminal between the battery module 24 and the battery module 25, and the negative electrode terminal of the battery module 25, to detect the voltage between the positive electrode terminal and the negative electrode terminal for each of the battery modules 21 to 25 through these both-end voltage detection lines 15A.

DC-DC converters 41 to 45 are connected to the battery modules 21 to 25, respectively, to adjust voltage balance when the voltages between the positive electrode terminal 26 and the negative electrode terminal 27 vary among the battery modules. The internal configurations of the DC-DC converters 41 to 45 are common and therefore only the internal configuration of the DC-DC converter 41 is shown and described here.

The DC-DC converter 41 includes a transformer 51 connected to the positive electrode terminal 32 and the negative electrode terminal 33 of the battery module 21 on the primary side and connected to the common line 16 on the secondary side. The primary coil of the transformer 51 has one end connected to the positive electrode terminal 32 through a diode 52 and the other end connected to the negative electrode terminal 33 of the battery module 21 through a switching element 53 of a photocoupler. The switching element 53 is rendered conductive by the turning on of an LED 54 of the photocoupler connected to a control current line 15B to which the balance control unit 15 outputs a control pulse voltage. The LED 54 is intermittently turned on and off, so that current is induced on the secondary side of the transformer 51 and the electric power of the battery module 21 is supplied to the secondary side of the transformer 51.

At the secondary coil of the transformer 51, a rectifying/regulating circuit having a rectifying diode 55 and a capacitor 56 is formed. The capacitor 56 has one end connected to the common line 16 through a blocking diode 59 and the other end connected to the negative electrode of the charger 11.

Since the common line 16 is connected to the positive electrode terminal 26 and the negative electrode of the charger 11 is connected with the negative electrode terminal 27, the current induced at the secondary coil of the transformer 51 is rectified and regulated by the diode 55 and the capacitor 56 and then applied to the positive electrode terminal 32 and the negative electrode terminal 27 of the battery system 2 to simultaneously charge the battery modules 21 to 25. Voltage-dividing resistors 57 and 58 are provided at both ends of the capacitor 56. An output voltage detection line 15C for the balance control unit 15 to detect voltage is connected at a middle point between the resistors 57 and 58.

The balance control unit 15 detects the voltage on the secondary side of the transformer 51 through the output voltage detection line 15C and performs ON duty control to turn on the LED 54 based on the difference between the detected voltage on the secondary side and a set voltage. In other words, the balance control unit 15 performs PWM control.
The set voltage is set to be higher than the voltage of the positive electrode terminal 26 (the positive electrode terminal 32) of the battery system 2, which is obtained through the both-end voltage detection line 15A.

The DC-DC converters 42-45 have a similar configuration and operate similarly.

As described above, the balance control unit 15 detects the both-end voltages of the battery modules 21 to 25 through the both-end voltage detection line 15A, and if a variation among the both-end voltages, for example, the difference between the battery module having a higher both-end voltage and the battery module having a lower both-end voltage, exceeds a preset range, or if there exists a battery module having a voltage higher than the average both-end voltage of the battery modules by a predetermined voltage, the balance control unit 15 charges the battery system 2 with power from the battery module having the higher both-end voltage, thereby adjusting the voltage balance. For example, in more detail, the balance control unit 15 outputs a pulse voltage to the LED of the DC-DC converter connected with the battery module having the highest both-end voltage, through the control current line 15B, to allow the aforementioned battery module to output power, and also converts the output voltage to a voltage higher by a predetermined level (for example, 1V) than the present voltage between the positive electrode terminal 26 and the negative electrode terminal 27 of the battery system 2. Accordingly, the battery module having a high voltage discharges power, so that the both-end voltage thereof becomes lower. On the other hand, the other battery modules whose both-end voltages are low are additionally charged, so that the both-end voltages thereof become higher. As a result, the balance of the voltages among the battery modules 21 to 25 can be improved.

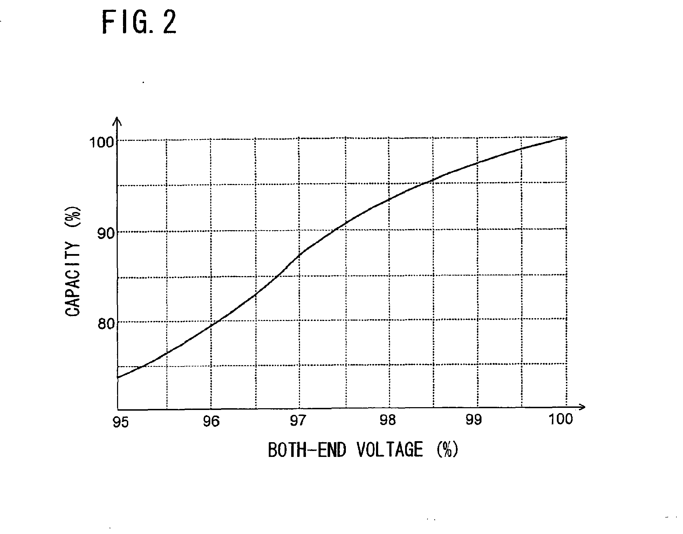

Fig. 2 is a graph showing the correlation between the both-end voltages and the power storage capacities of the battery modules 21 to 25. In the graph, the vertical axis shows the capacities of the batteries, and the horizontal axis shows the both-end voltages. The both-end voltages in the horizontal axis are represented by percentages where the both-end voltage has a voltage value of 100% when the capacity is 100%. Since most chargeable batteries including lithium ion batteries have a correlation between the both-end voltage and the capacity as shown in Fig. 2, the capacity can be obtained based on the both-end voltage. In particular, as shown in Fig. 2, in the range close to the capacity 100%, the difference of capacity corresponding to the difference of voltage value is significant.

Then, in the battery system 2, the battery modules 21 to 25 are connected with the DC-DC converters 41 to 45, respectively. Under the control of the balance control unit 15, the both-end voltages of the battery modules 21 to 25 are individually detected, and the battery module whose both-end voltage is higher than that of the other battery modules is allowed to discharge power, which is in turn boosted by the DC-DC converter for use in charging the battery modules 21 to 25. Accordingly, voltage balance can be adjusted quickly without wasting power. In the following, this operation will be described with reference to the flowcharts.

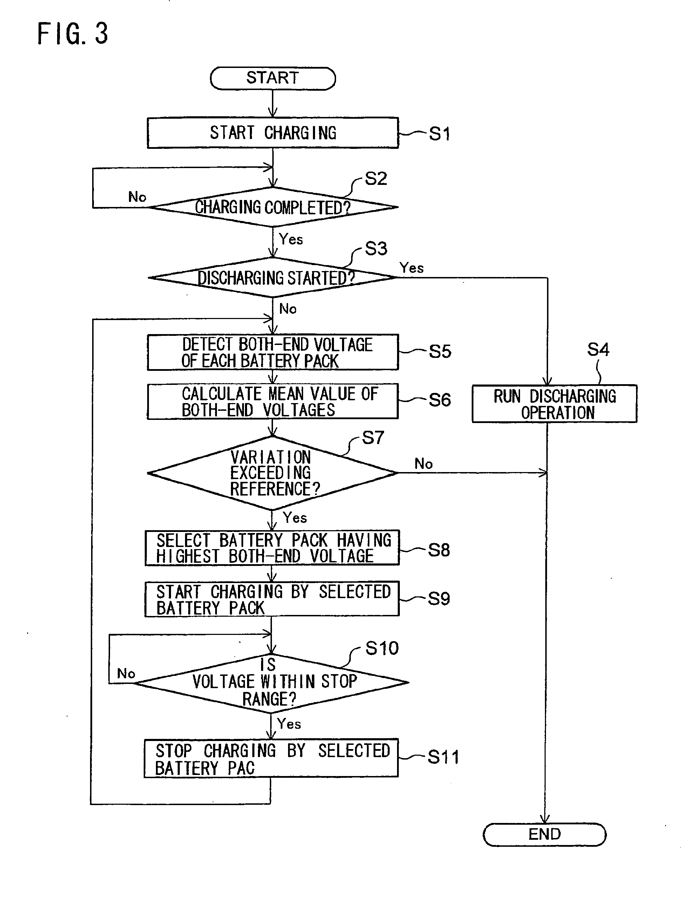

Fig. 3 is a flowchart showing an operation concerning the charging of the battery system 2.

The operation in Fig. 3 is started upon charging of the battery system 2. In a state in which the charging switch 12 and the discharging switch 13 are open, the charging/discharging control unit 14 closes the charging switch 12, and the charger 11 starts output of DC current, thereby starting charging of the battery system 2 (step S1). The balance control unit 15 waits until the charging of the battery system 2 is completed (step S2). When the charging is completed (step S2; Yes), it is determined whether discharging to the load 18 is to be performed (step S3).

If discharging to the load 18 is to be performed (step S3; Yes), the charging/discharging control unit 14 allows the charging switch 12 to open and allows the discharging switch 13 to close, so that power of the battery system 2 is output to the load 18 (step S4). The balance control unit 15 ends the present operation.

On the other hand, if discharging to the load 18 is not to be performed after completion of charging of the battery system 2 (step S3; No), the balance control unit 15 detects the both-end voltage of each of the battery modules 21 to 25 through the both-end voltage detection line 15A (step S5), and calculates the mean value of the detected both-end voltages of the battery modules 21 to 25 (step S6). Here, the balance control unit 15 determines whether there exists a variation that exceeds a preset reference, based on the both-end voltages of the battery modules 21 to 25, or based on the mean value calculated in step S6 and the both-end voltages of the battery modules 21 to 25 (step S7). This reference is defined as an allowable range of, for example, the difference between the both-end voltages of the battery modules 21 to 25 and the mean value or the voltage difference between the battery module having the lowest both-end voltage and the battery module having the highest both-end voltage.

If there exists a variation that exceeds the reference among the both-end voltages of the battery modules 21 to 25 (step S7; Yes), the balance control unit 15 selects the battery module having the highest both-end voltage (step S8) and starts charging with power of the selected battery module (step S9). In this step S9, the balance control unit 15 outputs a pulse voltage to the DC-DC converter connected to the selected battery module through the control current line 15B and performs PWM control of the switching element 53 to supply charging voltage between the positive electrode terminal 26 and the negative electrode terminal 27 of the battery system 2 with power of the selected battery module. After starting the charging by this battery module, the balance control unit 15 detects the both-end voltage of the selected battery module through the both-end voltage detection line 15A.

The balance control unit 15 continues charging until the both-end voltage of the selected battery module reaches a value within a preset stop range (step S10). The stop range is a voltage range set as a reference for stopping charging based on the mean value calculated in step S6, for example, in the range from the mean value to the mean value+2V (the value can be changed arbitrarily).

If the both-end voltage of the selected battery module falls within the stop range (step S10; Yes), the balance control unit 15 stops charging with power of the battery module (step S11) and returns to step S5. Thus, voltage balance is adjusted until the voltages of all the battery modules 21 to 25 reach the value in the stop range that is close to the mean value.

On the other hand, the balance control unit 15 ends the process if there are no variations that exceed the reference among the both-end voltages of the battery modules 21 to 25 detected through the both-end voltage detection lines 15A (step S7; No).

In the flowchart shown in Fig. 3, a single battery module is selected and its corresponding DC-DC converter is operated. Alternatively, a plurality of DC-DC converters may be operated simultaneously to allow a plurality of battery modules to discharge simultaneously, thereby achieving a similar effect.

As described above, in the battery system 2 according to the first embodiment of the invention, a plurality of battery modules 21 to 25 are connected in series. The battery module with a high voltage between terminals is allowed to discharge and the battery system 2 is recharged with the discharged electric energy so that the voltages across the respective battery modules are balanced at almost the same voltage. Therefore, electric energy, which is conventionally consumed through a resistor, is used for recharging, so that the charging efficiency can be increased.

In addition, electric energy discharged from the battery module is boosted by the DC-DC converter, so that the reduced efficiency when recharging can be prevented.

Moreover, a transformer is used in the DC/DC converter, so that the primary side and the secondary side of the converter can be isolated from each other.

### Second Embodiment

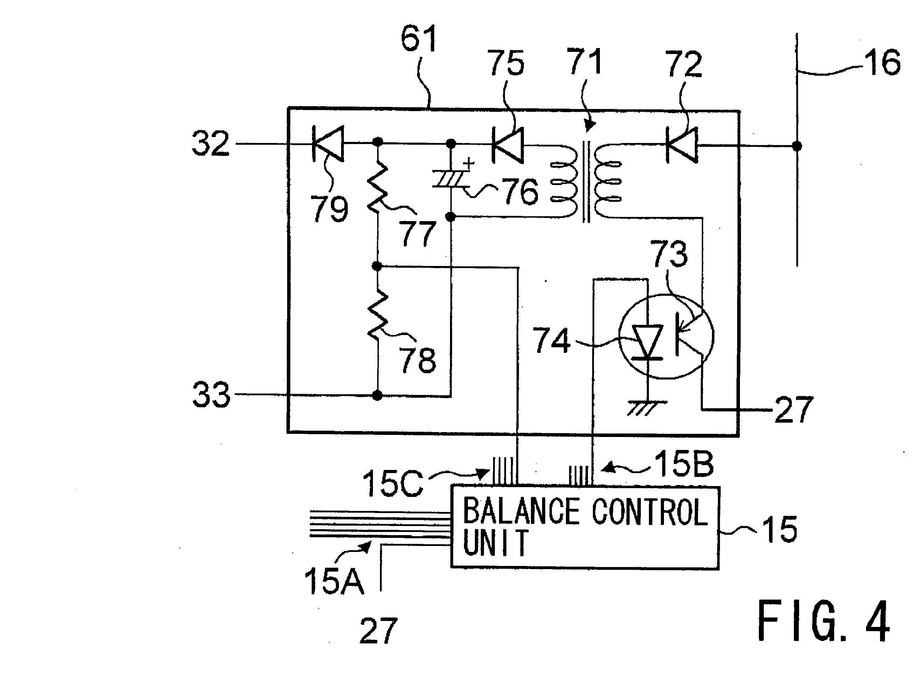

Fig. 4 shows a configuration of a DC-DC converter according to a second embodiment of the invention.

In this embodiment, the DC-DC converters 41 to 45 according to the first embodiment are replaced with DC-DC converters 61 to 65. Therefore, the common components, excluding the DC-DC converters 61 to 65, are similar.

The DC-DC converter 61 includes a transformer 71 connected with the positive electrode terminal 32 and the negative electrode terminal 33 of the battery module 21 on the secondary side and connected with the common line 16 on the primary side. The primary coil of the transformer 71 has one end connected to the positive electrode terminal 26 of the battery system through a diode 72 and the common line 16 and the other end connected to the negative electrode terminal 33 of the battery system through a switching element 73 of a photocoupler. The switching element 73 is rendered conductive by the turning on of an LED 74 of the photocoupler connected to the control current line 15B to which the balance control unit 15 outputs a control pulse voltage. The LED 74 is intermittently turned on and off, so that current is induced at the secondary-side of the transformer 71 and the electric power of the battery system 2 is supplied to the secondary side of the transformer 71.

At the secondary coil of the transformer 71, a rectifying and regulating circuit having a rectifying diode 75 and a capacitor 76 is formed. The capacitor 76 has one end connected to the positive electrode terminal of the battery module through a blocking diode 79 and the other end connected to the negative electrode terminal of the battery module.

Current induced at the secondary coil of the transformer 71 is rectified and regulated by the diode 75 and the capacitor 76, and then applied to the positive electrode terminal and the negative electrode terminal of the battery module to charge the battery module. Voltage-dividing resistors 77 and 78 are provided at both ends of the capacitor 76. The output voltage detection line 15C for the balance control unit 15 to detect voltage is connected at a middle point between the resistors 77 and 78.

The balance control unit 15 detects the voltage applied to the battery module through the output voltage detection line 15C and performs PWM control to control ON duty of the voltage applied to LED 74 through the control current line 15B so that the detected voltage is higher than the both-end voltage of the module.
The voltage applied to the positive electrode terminal and the negative electrode terminal of the battery module 21 is adjusted to a voltage value slightly higher (for example, +1V) than the present both-end voltage of the battery module 21. Accordingly, charging current is supplied to the battery module corresponding to the DC-DC converter 61.

In other words, the balance control unit 15 of the second embodiment adjusts voltage balance by selectively charging the battery module having a low both-end voltage, among the battery modules 21 to 25, with electric power of the battery system 2 through the common line 16 to increase the both-end voltage of the above-noted battery module. In the following, specific operations will be described.

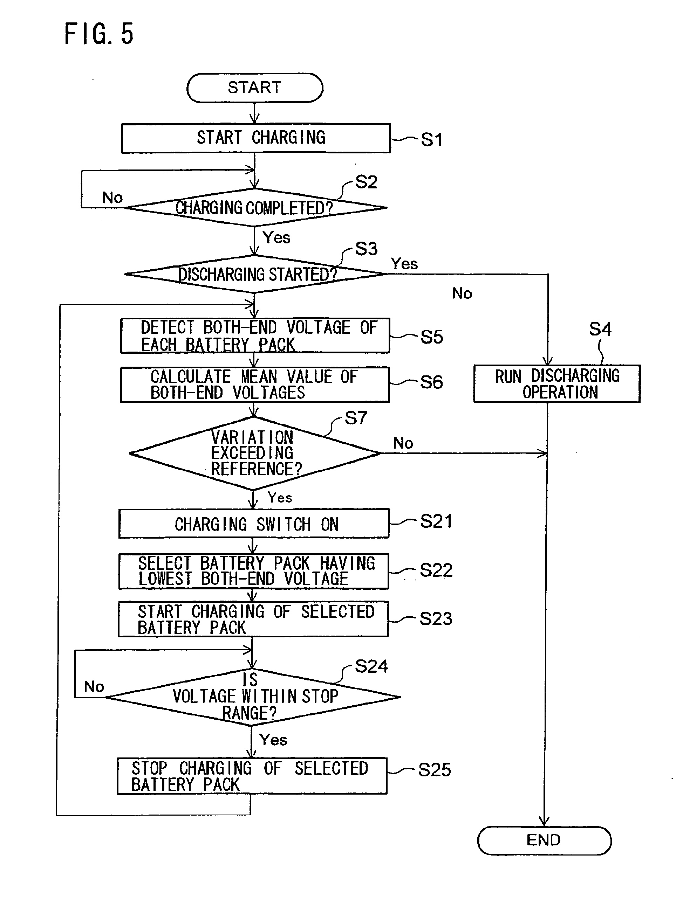

Fig. 5 is a flowchart showing an operation concerning the charging of the battery system 2. Of the operations shown in Fig. 5, the same operation as the operation according to the first embodiment shown in Fig. 3 will be denoted with the same step number, and a description thereof will not be repeated.

If there exists a variation that exceeds the reference among the both end voltages of the battery modules 21 to 25 (step S7; Yes), the balance control unit 15 selects a battery module having the lowest both-end voltage (step S21) and allows the DC-DC converter connected with the selected battery module to operate to charge the selected battery module (step S23). After starting the charging, the balance control unit 15 detects the both-end voltage of the selected battery module through the both-end voltage detection line 15A.

The balance control unit 15 continues charging until the both-end voltage of the selected battery module reaches a value within a preset stop range (step S24). The stop range refers to a voltage range set as a reference for stopping charging based on the mean value calculated in step S6, for example, in the range from the mean value to the mean value+2V (the value can be changed arbitrarily). If the both-end voltage of the selected battery modules reaches a value within the stop range (step S24; Yes), the balance control unit 15 stops charging of the selected battery module (step S25) and returns to step S5. Thus, voltage balance is adjusted until the voltages of all the battery modules 21 to 25 reach a value within the stop range that is close to the mean value.

As described above, in the battery system according to the second embodiment of the invention, the DC-DC converter corresponding to the battery modules 21 to 25 with the lowest voltage between terminals is operated to charge the above-noted battery module from the battery system through the common line, so that voltage balance can be adjusted easily without increasing heat generation and power loss.

The subject application is not limited to those configurations, and a DC-DC converter capable of supplying electric power in both directions between the battery modules 21 to 25 and the common line 16 may be used. Such a case will be described as a third embodiment.

### Third Embodiment

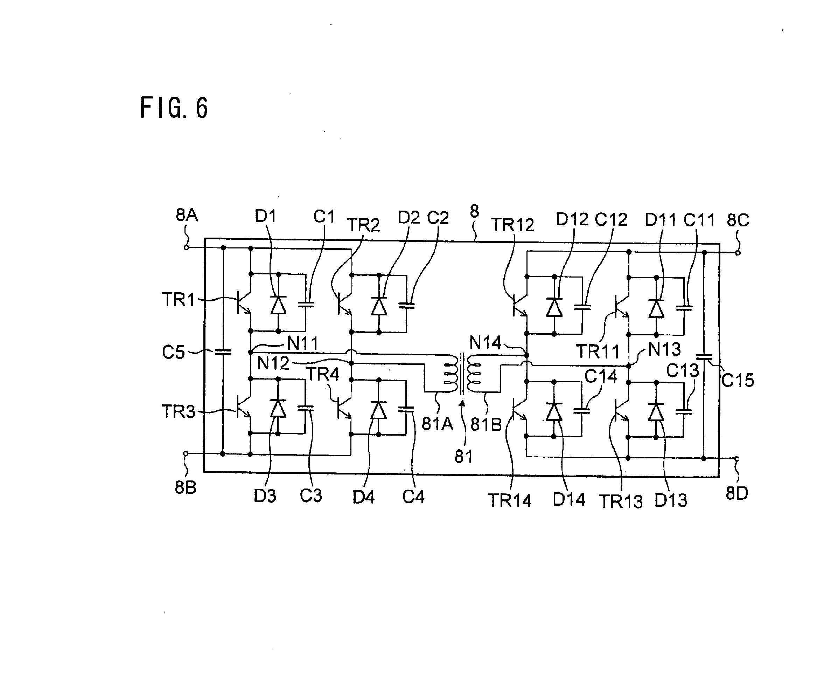

Fig. 6 is a circuit diagram of a DC-DC converter 8 according to a third embodiment of the invention. The DC-DC converter 8 may be used in place of the DC-DC converters 41 to 45 of the power storage system 1 as described in the first embodiment or in place of the DC-DC converters 61 to 65 of the power storage system 1A as described in the second embodiment.

The DC-DC converter 8 includes a transformer 81 and two pairs of terminals 8A and 8B and terminals 8C and 8D. The terminals 8A and 8B side of the DC-DC converter 8 may be used as the primary side and the terminals 8C and 8D side thereof may be used as the secondary side. Conversely, the terminals 8A and 8B side may be used as the secondary side and the terminals 8C and 8D side may be used as the primary side. In the following description, the terminals 8A and 8B side is used as the primary side, for the sake of convenience.

On the primary side of the transformer 81, a switch circuit including switching elements TR1 to TR4 (switching elements, FET, or the like), diodes D1 to D4 each connected in the direction opposite to the forward direction of those elements, and capacitors C1 to C4 connected in parallel with the respective diodes is formed in a single-phase bridge configuration to form a primary-side inverter portion. A node N11 and a node N12 of the respective arms of the inverter portion are connected to the primary side of the transformer 81. A capacitor C5 is also connected in parallel between DC lines (between the terminal 8A and the terminal 8B) of the inverter portion.

On the other hand, on the secondary side of the transformer 81, switching elements TR1 to TR14, diodes D11 to D14, and capacitors C11 to C 14 are connected similarly in a single phase bridge configuration to form a secondary-side inverter portion. Similarly to the primary-side inverter portion, a capacitor C15 is connected between the terminal 8C and the terminal 8D, and a node N13 and a node N14 are connected to the secondary side of the transformer 81.

The DC-DC converter 8 is provided in such a manner that, for example, the terminal 8A is connected to the positive electrode terminal 26 of the battery module 21 (Fig. 1), the terminal 8B is connected to the negative electrode terminal 27 of the battery module 21, the terminal 8C is connected to the common line 16 (Fig. 1), and the terminal 8D is connected to the negative electrode side of the charger 11 (Fig. 1).

The switching elements TR1 to TR4 and TR11 to TR 14 are each turned on/off by the control of the balance control unit 15 (Fig. 1). In the configuration in Fig. 1, the balance control unit 15 applies a pulse voltage to the DC-DC converters 41 to 45 through the control current line 15B, whereas in the third embodiment, the control current of the switching elements TR1. to TR4 and TR11 to TR14 is individually controlled by the control balance unit 15. Accordingly, the converting/halt of the DC-DC converter 8 and the voltage supplied from the primary side to the secondary side of the transformer 81 can be controlled by the balance control unit 15.

As in the first embodiment, when electric power is supplied from the battery module 21 to the common line 16, the DC-DC converter 8 functions with the terminals 8A and 8B serving as the primary side and the terminals 8C and 8D serving as the secondary side. In this case, on the primary side, the switching elements TR1 to TR4 included in the inverter portion are supplied with a switching signal based on a PWM theory under the control of the balance control unit 15, so that DC power supplied between the terminal 8A and the terminal 8B is transformed into a pseudo sinusoidal wave at a predetermined frequency, which is in turn supplied to the primary side 81A of the transformer 81.

The frequency and voltage of the pseudo sinusoidal wave is controlled such that the voltage obtained at the secondary side of the transformer 81 attains a desired value. The generation of the switching signal based on the PWM theory can be calculated through modulation of a carrier wave (for example, triangular wave) and a modulated wave (for example, sinusoidal wave) as generally known, and therefore a detailed description thereof will not be repeated here.

The power induced at the secondary side 81B of the transformer 81 is rectified and smoothed by the turning off of the switching elements TR11 to TR14 to allow the diodes D11 to D14 to operate as a full-wave rectifying circuit and the capacitor C15 to operate as a smoothing capacitor. The voltage between the terminal 8C and the terminal 8D can be controlled at a desired value by detecting the voltage between those terminals and adjusting the amplitude of the modulated wave during the above-noted modulation.

Through this operation, electric power is supplied from the battery module 21 to the positive electrode terminal 26 and the negative electrode terminal 27 of the battery system 2, so that an effect similar to the first embodiment can be achieved.

On the other hand, when electric power is supplied from the common line 16 to the battery module 21 as in the second embodiment, a pseudo sinusoidal wave is generated similarly as above in the secondary-side inverter portion, and the primary side 81A of the transformer 81 is operated as a full-wave rectifying circuit. The voltage between the terminal 8A and the terminal 8B can thus be adjusted similarly as above.

Through this operation, the battery modules 21 to 25 can be charged individually with electric power from the common line 16, so that an effect similar to the second embodiment can be achieved.

In this manner, the DC-DC converter 8 in the third embodiment has the switching elements switched under the control of the balance control unit 15 to allow supply of electric power from the battery modules 21 to 25 to the common line 16 as well as supply in the opposite direction. Therefore, the operations described in the first and second embodiments can be realized with a single configuration using the DC-DC converter 8 in place of the DC-DC converters 41 to 45 and the DC-DC converters 61 to 65.

Then, in the configuration using the DC-DC converter 8, of the battery modules 21 to 25, a battery module with a high voltage between the positive electrode terminal and the negative electrode terminal is allowed to discharge power to the common line while the battery module with a low voltage between terminals is charged from the common line. In other words, charging and discharging among the battery modules becomes possible, so that the voltage balance can be adjusted quickly and easily.

### Fourth Embodiment

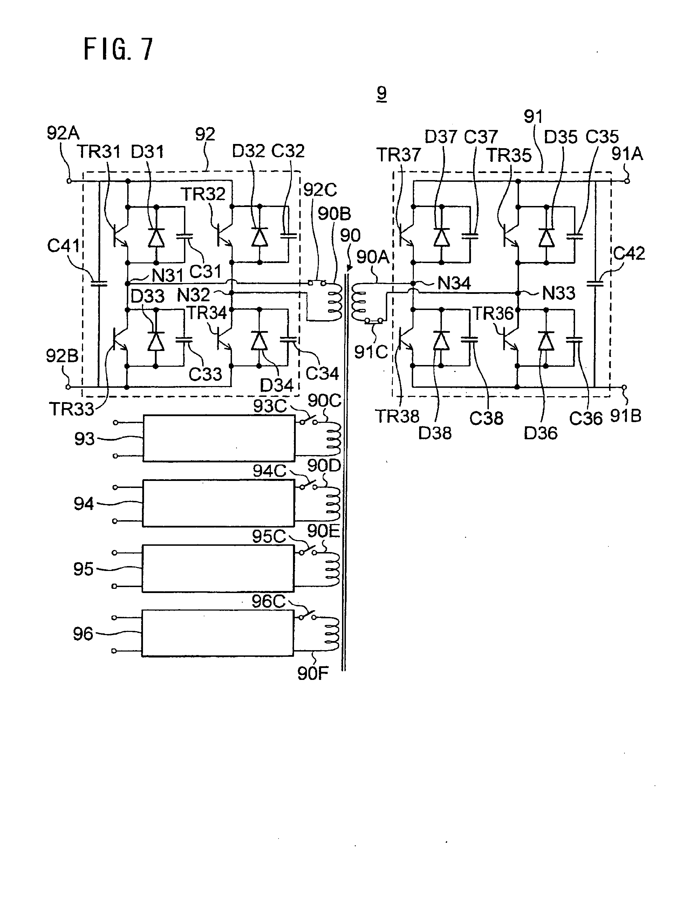

Fig. 7 shows a configuration of a charging circuit unit 9 according to a fourth embodiment of the invention.

The charging circuit unit 9 includes five charging circuits 91 to 96 including coils 90A to 90F, respectively, and a transformer 90 to which the coils 90A to 90F of the charging circuits 91 to 96 are electromagnetically coupled.

The charging circuit unit 9 is disposed in place of the DC-DC converters 41 to 45 in the power storage system 1 shown in Fig. 1. More specifically, the charging circuit 91 is connected to the positive electrode terminal 26 and the negative electrode terminal 27 of the battery system through the common line 16, and the charging circuits 92 to 96 are connected to the positive electrode terminals and the negative electrode terminals of the battery modules 21 to 25, respectively.

The charging circuit unit 9 has the primary side formed of one or more charging circuits selected from the charging circuits 92 to 96 and the secondary side formed of one or more charging circuits selected from the charging circuits 92 to 96 excluding those of the primary side, and supplies electric power from the primary side to the secondary side through the transformer 90. Accordingly, the battery module having a high both-end voltage is selected from among the battery modules 21 to 25, so that the other one or more battery modules are charged with the electric power from the selected battery module.

Furthermore, the charging circuit unit 9 electromagnetically couples one or more charging circuits selected from the charging circuits 92 to 96 to the charging circuit 91 through the transformer 90 to perform an operation of selecting the battery module having a low both-end voltage among the battery modules 21 to 25 and charging the selected battery module with the power from the common line 16, and an operation of charging the entire battery system 2 with the electric power from the battery module having a high both-end voltage among the battery modules 21 to 25.

The internal configurations of the charging circuits 92 to 96 are common and therefore only the internal configuration of the charging circuit 92 is shown and described here.

A terminal 92A of the charging circuit 92 is connected to the positive electrode terminal 32 of the battery module 21 (Fig. 1) and a terminal 92B of the charging circuit 92 is connected to the negative electrode terminal 33 of the battery module 21.

The charging circuit 92, having a configuration similar to the primary-side inverter portion shown in Fig. 6, is formed of switching elements TR31 to TR34, diodes D31 to D34, and capacitors C31 to C34 connected in a single-phase bridge configuration. A capacitor C35 is connected between the terminal 92A and the terminal 92B, and a node N31 and a node N32 are each connected with the secondary side 90B of the transformer 90. An open/close switch 92C opens/closes the electrical connection between the secondary side 90B of the transformer 90 and this inverter portion. The operation of the present inverter portion is similar to that of the above-noted inverter portion and therefore a description thereof will not be repeated.

The charging circuit 91, having a configuration similar to the secondary-side inverter portion shown in Fig. 6, is formed of switching elements TR35-TR38, diodes D35-D38, and capacitors C35-C38 connected in a single-phase bridge configuration. A capacitor C42 is connected between the terminal 91A and the terminal 91B, and a node N33 and a node N34 are each connected to the primary side 90A of the transformer 90. An open/close switch 91C opens/closes the electrical connection between the primary side 90A of the transformer 90 and this inverter portion. The operation of the present inverter portion is similar to that of the above-noted inverter portion and therefore a description thereof will not be repeated.

When the charging circuit 91 functions as the primary side, the ON/OFF control of the switching elements TR35-TR38 is performed, so that a pseudo sinusoidal wave is supplied to the primary side 90A of the transformer 90. When the charging circuit 92 functions as the secondary side, the OFF control of the switching elements TR31 to TR34 is performed, so that the induced current through the coil 90B is full-wave rectified by the diodes D31 to D34 connected in a bridge configuration and smoothed by the capacitor 41 and then output as DC power from the terminals 92A, 92B.

When the charging circuit 92 functions as the primary side, the ON/OFF control of the switching elements TR31 to TR34 is performed, so that a pseudo sinusoidal wave is supplied to the secondary side 90B of the transformer 90. When the charging circuit 91 functions as the secondary side, the OFF control of the switching elements TR35-TR38 is performed, so that the induced current through the coil 90A is full-wave rectified by the diodes D35-D38 connected in a bridge configuration and regulated by the capacitor 42 and then output as DC power from the terminals 91A, 91B.

In the transformer 90, since all of the coils 90A-90F can be electromagnetically coupled to each other, switches are provided for selecting the coils operating as the primary side and the secondary side among the coils 90A-90F.

Specifically, the coil 90A is provided with a switch 91C for opening/closing interconnection between the coil 90A and the charging circuit 91. The switch 91C is opened/closed by the control of the balance control unit 15. While the switch 91C is open, the coil 90A is not conducting and the charging circuit 91 neither operates as the primary side nor the secondary side. Similarly, switches 92C to 96C that are opened/closed by the control of the balance control unit 15 are provided for the respective interconnections between the coils 90B to 90F and the charging circuits 92 to 96. When those switches 92C to 96C are opened, the corresponding charging circuits 92 to 96 neither operate as the primary side nor the secondary side.

When selecting the charging circuit operated as the primary side and the charging circuit operated as the secondary side among the charging circuits 91 to 96, the balance control unit 15 closes the switches provided for the interconnections between the selected charging circuits and the coils, among the switches 91C to 96C. The charging circuit with the switch closed can operate either as the primary side or the secondary side. Therefore, when the balance control unit 15 switches the selected switching circuits, the charging circuit functions as the primary side while the other selected charging circuit operates as the secondary side to be supplied with electric power.

In this manner, the balance control unit 15 opens/closes the switches 91C to 96C as appropriate to allow only a given charging circuit, of the charging circuits 92 to 96, to operate. Accordingly, as described above, it is possible to select a battery module whose both-end voltage is high from among the battery modules 21 to 25, and to charge the other, one or more battery modules with electric energy from the selected battery module. Furthermore, it is also possible to select a battery module whose both-end voltage is low from among the battery modules 21 to 25, and to charge the selected battery module with electric power from the common line 16. Moreover, it is also possible to charge the entire battery system 2 with electric energy from a battery module whose both-end voltage is high, among the battery modules 21 to 25. Therefore, voltage balance can be adjusted quickly and easily by the control of the balance control unit 15.

In this configuration using the charging circuit unit 9 in the fourth embodiment, the switching elements are switched under the control of the balance control unit 15, so that electric power can be supplied from the battery modules 21 to 25 to the common line 16 and can also be supplied in the opposite direction. Therefore, the operations described in the first and second embodiments can be realized with a single configuration using the charging circuit unit 9 in place of the DC-DC converters 41 to 45 and the DC-DC converters 61 to 65.

Furthermore, the battery modules 21 to 25 are charged from the charging circuit corresponding to the battery module having a low voltage so that the voltages between the respective positive electrode terminals and the respective negative electrode terminals of the battery modules 21 to 25 become equal. Accordingly, the battery module having a low voltage can be charged quickly, and voltage balance can be adjusted easily.

### Fifth Embodiment

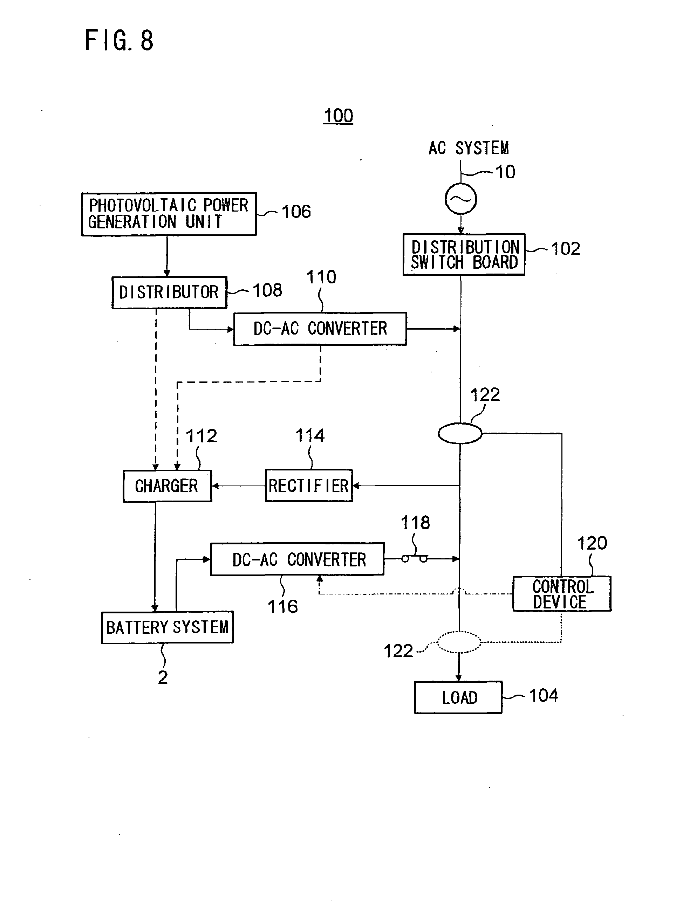

Fig. 8 shows a configuration of a power storage system 100 according to a fifth embodiment of the invention.

The power storage system 100 includes a photovoltaic power generation unit 106 such that the battery system 2 can be charged with electric power from the commercial AC power supply system grid 10 as well as electric energy generated by the photovoltaic power generation unit 106.

In the power storage system 100, a distribution switch board 102 is connected to the commercial AC power supply system 10, and a load 104 is connected downstream from the distribution switch board 102.

A distributor 108 is connected to the photovoltaic power generation unit 106 such that electric energy generated by the photovoltaic power generation unit 106 is distributed and output to a DC-AC converter 110 and/or a charger 112. The DC-AC converter 110 boosts DC current output by the photovoltaic power generation unit 106 to a voltage required to obtain AC power having a frequency equal or approximately equal to that of the commercial AC power supply system 10, and then converts the boosted voltage into AC power to be supplied to the load 104. The boosted DC power may be output from the DC-AC converter 110 to the charger 112.

The charger 112 is connected with the distributor 108, the DC-AC converter 110, and a rectifier 114 connected to the commercial AC power supply system 10. The charger 112 receives DC power generated by the photovoltaic power generation unit 106 unmodified from the distributor 108, receives the boosted DC power from the DC-AC converter 110, and receives the rectified and smoothed DC power of the commercial AC power supply system 10 from the rectifier 114. The charger 112 charges the battery system 2 with DC power received from the distributor 108, the DC-AC converter 110, and the charger 112.

The output of the battery system 2 is connected to a line downstream from the distribution switch board 102 of the commercial AC power supply system 10 through a DC-AC converter 116 and can be disconnected, together with the DC-AC converter 116, from the commercial AC power supply system 10 by a magnet switch 118.

The power storage system 100 charges the battery system 2 with power from the commercial AC power supply system 10 and power generated by the photovoltaic power generation unit 106 as described above and also feeds the load 104 with power from the commercial AC power supply system 10, power generated by the photovoltaic power generation unit 106, and power charged in the battery system 2.

The power storage system 100 includes a control device 120 for controlling discharging from the battery system 2. The control device 120 is connected with a current detector 122 for detecting current through the load 104 to calculate the amount of power used by the load 104 based on the current detected by the current detector 122 and to control the DC/AC converter 116 based on the amount of used power, thereby adjusting discharging (output) from the battery system 2. The current detector 122 shown in the figure is provided between a node receiving current from the DC-AC converter 110 and a node receiving current from the DC-AC converter 116. Alternatively, for example, as shown by the broken line in the figure, the current detector 122 may be provided downstream from a node receiving current from the DC-AC converter 116.

In the power storage system 100, the above-described DC-DC converters 41 to 45 (Fig. 1), DC-DC converters 61 to 65 (Fig. 4), the DC-DC converter 8 (Fig. 6), or the charging circuit unit 9 (Fig. 7) may be provided for the battery modules 21 to 25 (Fig. 1) of the battery system 2 to adjust balance of the voltages among the battery modules 21 to 25.

In the configuration in the first to fourth embodiments, the battery system 2 is charged with power from the commercial AC power supply system 10. Specifically, electricity is provided in such a manner that the battery system 2 is charged during hours when electricity costs are low based on a time-based electric rate contract or a midnight electricity contract, and the battery system 2 is discharged during peak hours, i.e., during the daytime to cover the electricity to be consumed.

In the present fifth embodiment, charging is performed by the commercial AC power supply system 10 during hours when electricity costs are low, and in addition, the battery system 2 is charged with power generated by the photovoltaic power generation unit 106 during other hours. Therefore, the battery system 2 is charged and discharged frequently, so that the both-end voltages of the battery modules 21 to 25 of the battery system 2 may often vary. Applying the first to fourth embodiments to this configuration enables easy adjustment of balance of the voltages among the battery modules 21 to 25, and the frequent adjustment of voltage balance does not entail risks of power loss or heat generation. This permits more efficient power storage and discharge, thereby improving the efficiency of the power storage system using the battery system 2.

Although the invention has been described based on the embodiments above, the foregoing embodiments are only shown to illustrate specific applications, and the invention is not limited thereto. For example, in the foregoing embodiments, the charging/discharging control unit 14 opens/closes the discharging switch 13 to supply DC power to the DC load 18 in the system including the battery system 2, by way of example. However, the invention is not limited thereto, and any load may be used, and the load may be supplied with AC power converted by a DC-AC converter or a power conditioner. Furthermore, the balance control unit 15 that controls charging of the battery system 2 may detect the amount of charging current supplied to the battery modules 21 to 25 for voltage balance adjustment. In this case, the balance control unit 15 may control charging of the battery modules 21 to 25 based on current input to the battery modules 21 to 25. The number of battery modules, specific circuit configurations of the DC-DC converter and the charging circuit unit, configurations details of the peripheral circuits, and the like may also be modified as necessary, as a matter of course.

## Claims

1. A battery system (1) comprising:
a plurality of battery modules (21)(22)(23)(24)(25) electrically connected in series through two electrodes, each battery module being configured to include a plurality of battery cells (31) in a manner chargeable and dischargeable through positive electrode and negative electrode terminals (32)(33);
a charging control unit (or a charging/discharging control unit (14)) connected between both two electrodes of the plurality of battery modules connected in series to simultaneously charge the plurality of battery modules; and
a voltage detector (15) for detecting a voltage between the positive electrode terminal and the negative electrode terminal of each of the battery modules;
electrical energy discharged from the battery module whose voltage between terminals detected by the voltage detector is higher than the voltages between terminals of the other battery modules being boosted to a predetermined voltage to be simultaneously supplied to the plurality of battery modules.

2. The battery system according to claim 1, wherein a DC-DC converters (41)(42)(43)(44)(45) having an input side connected to the positive electrode terminal and the negative electrode terminal of each of the battery modules are provided, and output from the battery module boosted by the DC-DC converters is simultaneously supplied to the plurality of battery modules.

3. A battery system (1) comprising:
a plurality of battery modules (21)(22)(23)(24)(25) electrically connected in series through two electrodes, each battery module being configured to include a plurality of battery cells (31) in a manner chargeable and dischargeable through positive electrode and negative electrode terminals (32)(33); and
a charging control unit (or a charging/discharging control unit (14)) connected between both two electrodes of the plurality of battery modules connected in series to simultaneously charge the plurality of battery modules;
a DC-DC converters (41)(42)(43)(44)(45) being connected to each of the battery modules, with a primary side between the positive electrode and the negative electrode, and
electrical energy discharged from the battery module whose voltage between terminals is higher than the voltages between terminals of the other battery modules being boosted to a target voltage through the DC-DC converter corresponding to that battery module, and thereafter the boosted voltage being supplied to the battery module whose voltage is lower than the voltage between terminals of that battery module.

4. The battery system according to claim 3, wherein electrical energy is discharged from the battery module whose voltage between terminals is higher than a mean value of the voltages between terminals or a value obtained based on the mean value, or a predetermined value.

5. The battery system according to claim 3, wherein the DC-DC converter corresponding to the battery module with a lower voltage between terminals is operated to receive on a primary side DC power output from the DC-DC converter corresponding to the battery module with a higher voltage between terminals.

6. The battery system according to claim 3 or 4, wherein a mean voltage is obtained from voltages between the positive electrode terminals and the
negative electrode terminals of the battery modules, and the DC-DC converter is operated until the voltage between the positive electrode terminal and the negative electrode terminal of the battery module supplying power through the DC-DC converter approaches a target value.

7. The battery system according to claim 6, wherein the DC-DC converter has a primary side and a secondary side isolated from each other by a transformer (51) at least including a primary-side coil and a secondary-side coil.

8. A battery system (1) comprising:
a plurality of battery modules (41)(42)(43)(44)(45) connected in series through two electrodes, each battery module including a combination of a plurality of battery cells (31) in a manner chargeable and dischargeable through positive electrode and negative electrode terminals (32)(33) of the battery module; and
a charging circuit (9) connected to the positive electrode terminal and the negative electrode terminal of each of the battery modules;
the battery module with a low voltage between the positive electrode terminal and the negative electrode terminal being charged with electrical energy from the charging circuit corresponding thereto so that voltages between the positive electrode terminals and the negative electrode terminals of the battery modules become equal.
